# EUROPÄISCHE PATENTSCHRIFT

(11) **EP 0 545 426 B1**
(45) Veröffentlichungstag und Bekanntmachung des Hinweises auf die Patenterteilung: **28.05.1997**
(21) Anmeldenummer: 92120720.5
(22) Anmeldetag: 04.12.1992
(51) Int. Cl.: C08B 11/20

(54) **Verfahren zur reinigenden Aufbereitung von bei der Herstellung von Celluloseethern anfallenden Reaktions- und/oder Waschmedien**
Process for purifying the reaction and/or wash media from the preparation of cellulose ethers
Procédé pour purifier les milieux de réaction et/ou de lavage issus de la fabrication des éthers de cellulose

(30) Priorität: 06.12.1991 DE 4140272
(43) Veröffentlichungstag der Anmeldung: 09.06.1993
(73) Patentinhaber: HOECHST AKTIENGESELLSCHAFT, 65926 Frankfurt am Main (DE)
(72) Erfinder: Wallisch, Heinz, W-6228 Eltville (DE); Dönges, Reinhard, Dr., W-6232 Bad Soden/Ts. (DE); Meyer-Blumenroth, Ulrich, Dr., W-6270 Idstein/Ts. (DE)

(56) Entgegenhaltungen:
- EP-A- 0 136 518
- JP-B-63 063 274
- R. Dönges, British Polymer Journal, 23 (1990) 315-326

## Beschreibung

Celluloseether werden in der Regel durch Alkalisieren von Zellstoff und anschließende Umsetzung mit Veretherungsmitteln, wie Methylchlorid, Ethylenoxid, Propylenoxid oder Chloressigsäure in Gegenwart von geeigneten Löse- oder Suspendiermitteln hergestellt. Je nach Einsatzgebiet des Celluloseethers werden mehr oder weniger hohe Anforderungen an dessen Reinheit gestellt, so daß ein in den Herstellprozeß integrierter Reinigungsschritt notwendig ist.

Je nach verwendeten Veretherungsmitteln und Höhe des Substitutionsgrades zeigen die hergestellten Celluloseether ein unterschiedliches, temperaturabhängiges Löseverhalten in wäßrigen Medien. Bei in heißem Wasser schlecht oder gar nicht löslichen rohen, d.h. ungereinigten, Celluloseethern, kann die Reinigung durch Herstellen einer wäßrigen Suspension und anschließende Trennung in Feststoff und Dekantat erfolgen. Durch wiederholtes Suspendieren in heißem Wasser und erneutes Abtrennen der wäßrigen Phase läßt sich die gewünschte Reinheit der Celluloseether erhalten. Die bei der Herstellung und Reinigung von Celluloseethern anfallenden Reaktions- und/oder Waschmedien sind insbesondere mit organischen Verbindungen belastet. Bei den immer wichtiger werdenden Anforderungen an eine möglichst geringe Belastung der Umwelt ist es daher erforderlich, insbesondere organische Verbindungen enthaltende Abwässer, die einen hohen chemischen Sauerstoffbedarf (CSB) besitzen, weitgehend zu reinigen, bevor diese an die Gewässer abgegeben werden. Deshalb werden Trenn- und Reinigungsverfahren gesucht, mit deren Hilfe flüssige Reaktions- und/oder Waschmedien gereinigt werden können, wobei die Abtrennung der biologisch schwer abbaubaren Abwasserinhaltsstoffe von besonderer Bedeutung ist.

In der DE-A-33 31 997 wird ein Verfahren zur Reinigung von bei der Celluloseetherherstellung anfallenden Reaktions- und Waschflüssigkeiten beschrieben, wobei die Reaktions- bzw. Waschflüssigkeit zuerst einer Destillation unterzogen wird, um leicht siedende organische Reaktionsprodukte oder nicht umgesetzte Reaktionskomponenten zu entfernen, und anschließend der destillative Rückstand einer Ultrafiltration (UF) bei einer Temperatur im Bereich von 30 bis 40°C unterzogen wird. Nachteilig an diesem Verfahren sind die erzielten niedrigen Durchflußraten (Fluxraten) während der Ultrafiltration, wodurch der Einsatz von sehr großen Membranflächen erforderlich wird, die letztlich zu unwirtschaftlichen Ultrafiltrationsanlagen führen.

In der JP-OS-82/68190 wird ein Verfahren zur Reinigung von Abwasser, welches gelöste nichtionische Celluloseether enthält, durch Flockung mit phenolischen Verbindungen, wie Phenol oder Tannin beschrieben. Bei diesem Verfahren verbleibt jedoch ein durch überschüssiges Flockungsmittel verursachter CSB im Abwasser. Durch Oxidation mit chlorhaltigen Oxidationsmitteln, wie Chlorat oder Natriumhypochlorit wird dieser Rest-CSB aus dem Abwasser entfernt, wobei durch den Einsatz dieser chlorhaltigen Oxidationsmittel die Bildung von AOX (adsorbierbare organische Halogenverbindungen) resultiert.

Es bestand daher der dringende Wunsch nach einem Verfahren, das es ermöglicht, unter Anwendung der Ultrafiltration zu höheren Fluxraten und somit zu kleineren und wirtschaftlichen Membranflächen zu gelangen, und das es gegebenenfalls ermöglicht, die im Konzentrat der Ultrafiltration enthaltenen organischen Verbindungen auf einfache Art und Weise zu entfernen.

Gegenstand der Erfindung ist ein Verfahren zur reinigenden Aufbereitung von bei der Herstellung von heißwasserunlöslichen Celluloseethern aus Cellulose, Alkalihydroxid und mindestens einem Veretherungsmittel in einem Wasser und gegebenenfalls mindestens ein organisches Lösungsmittel enthaltenden Medium anfallenden flüssigen Reaktions- und/oder Waschmedien durch Ultrafiltration in ein Permeat und ein Konzentrat. Dieses Verfahren ist dadurch gekennzeichnet, daß die Ultrafiltration der Reaktions- und/oder Waschmedien bei einer Temperatur oberhalb von 45°C an oder oberhalb der Flockungstemperatur der Celluloseether durchgeführt wird. Die Flockungstemperatur ist in der vorliegenden Erfindung als Temperatur definiert, bei der die Transparenz einer 1 %igen wäßrigen Lösung eines Celluloseethers auf 50 % ihres bei Raumtemperatur gemessenen Wertes abgesunken ist, wobei eine Aufheizrate von 3°C/min eingehalten wird.
(Anspruch 1)

Die abhängigen Ansprüche geben zweckmäßige Weiterbildungen des Verfahrens an.

Die Ultrafiltration wird mit den bei der Herstellung oder Reinigung von Celluloseethern anfallenden Reaktions- bzw. Waschmedien durchgeführt. Bei den hergestellten Celluloseethern handelt es sich um heißwasserunlösliche Celluloseether, wie z.B. Methylcellulosen, Methylcellulosemischether, Ethylcellulosen, Hydroxypropylcellulosen und deren Mischether.
Die erfindungsgemäß zu reinigenden heißwasserunlöslichen Celluloseether weisen ein temperaturabhängiges Flockungsverhalten auf. Bei Temperaturerhöhung flocken sie aus der wäßrigen Lösung aus.
Diese Erscheinung ist dem Fachmann bekannt und der Fachliteratur, wie R. Dönges, British Polymer Journal 23, 315-326 (1990) zu entnehmen.

Die Reaktions- oder Waschmedien enthalten im wesentlichen anorganische Salze wie Kochsalz, organische Reaktionsnebenprodukte, nicht umgesetzte organische Reaktionskomponenten, gelöste Celluloseetherbestandteile, sowie natürliche Begleitstoffe der Cellulose und deren Reaktionsprodukte.
Organische Reaktionsnebenprodukte sind beispielsweise die durch Hydrolyse und gegebenenfalls Polymerisation der eingesetzten Veretherungsreagenzien gebildeten Alkohole und deren Veretherungsprodukte wie z.B. Methanol, Ethanol, Dimethylether, Diethylether, Ethylenglykol, Monomethylglykol, Dimethylglykol, Ethylglykol, Diethylglykol, Propylenglykol, Monomethylpropylenglykol, Dimethylpropylenglykol, Diethylenglykol und seine alkylierten Derivate, Dipropylenglykol und seine alkylierten Derivate sowie höhere homologe Polyalkylenglykole und deren alkylierte Derivate.

Der Celluloseetheranteil besteht im wesentlichen aus Celluloseethermolekülen, die aufgrund des niedrigen Polymerisationsgrades bei der Waschtemperatur im Waschmedium gelöst sind. Neben den vorstehend genannten Bestandteilen können die zu reinigenden Reaktions- bzw. Waschmedien noch weitere Bestandteile enthalten, wie sie bei der Celluloseetherherstellung üblicherweise anfallen.

Bezüglich der Technologie der Ultrafiltration und der dabei verwendeten Werkstoffe und Anlagen wird auf Ullmann's Encyclopädie der Technischen Chemie, Stichwort "Membranen", Verlag Chemie, Weinheim, 4.Aufl. Band 16, 1978, S. 515-535 und die in DE-A-33 31 997 genannten Ultrafiltrationsanlagen verwiesen.
Im erfindungsgemäßen Verfahren kommt beispielsweise ein Rundplattenmodul zum Einsatz, der im wesentlichen aus einem zwischen zwei Endplatten gespannten Stapel aus Tragplatten (insbesondere kreisförmig) und Leitplatten besteht, die abwechselnd gestapelt übereinander angeordnet sind. Die Tragplatten sind beidseitig mit Drainageschichten und Membranen belegt und haben in der Mitte eine Bohrung als Wasserdurchlaß. Die Leitplatten dienen zur Führung des Rohwassers. Als geeignet hat sich beispielsweise ein "RP-Modul" der GKSS-Forschungszentrum Geesthacht GmbH, Hamburg, herausgestellt. Grundsätzlich vergleichbare Geräte werden beispielsweise von den Firmen Forschungsinstitut Berghoff GmbH/Tübingen oder A/S Danske Sukkerfabrikker Nakskov (DK) geliefert. Andere geeignete Module sind Wickel(Spiral-)Module oder Rohrmodule. Es hat sich gezeigt, daß die Durchführung der Ultrafiltration in einem Modul, bei dem die auf der Membranoberfläche auftretenden Scherkräfte nicht durch die aus dem Volumendurchsatz resultierende Anströmgeschwindigkeit bestimmt werden, besonders vorteilhaft ist. Insbesondere bei der Verwendung von Plattenmodulen mit Rührer hat sich gezeigt, daß bei diesen Modulen hohe Scherkräfte erzeugt werden und ein sehr geringer Unterschied in der transmembranen Druckdifferenz am Ein- und Ausgang der Ultrafiltrationszelle herrscht, wodurch die Bildung einer Sekundärmembran signifikant reduziert wird und eine erhöhte Trennleistung resultiert.
Ebenfalls geeignet sind Module, in denen die Membranflächen parallel zueinander bewegt werden. Derartige Module sind z.B. Chiral Flow Filter der Fa. Herco/Freiberg oder ähnliche Modelle der Firmen Membrex und Pall.
Entsprechend den eingesetzten Membranen liegen die Drucke im Bereich von bis zu 10 bar, bevorzugt zwischen 2 und 7 bar.
Als Membranteil wird bei der Ultrafiltration im erfindungsgemäßen Verfahren beispielsweise ein solches aus Polyethersulfon eingesetzt, d.h. ein aus p-Phenylen-Einheiten aufgebautes Polymeres, dessen Einheiten alternierend durch Sulfon- oder Ethergruppen verbunden sind und das sehr stabil über einen pH-Bereich von 1 bis 14 ist; es sind aber auch andere Materialien geeignet, soweit sie die vorgegebenen Anforderungen erfüllen. Bei einer Regenerierung der beim Verfahren verwendeten Membranen können das Permeat, aber auch konventionelle Reiniger, wie wäßrige Zitronen- oder Salpetersäure-Lösung, zum Einsatz kommen.

Bei der Herstellung von einer als repräsentatives Beispiel ausgesuchten Methylhydroxyethylcellulose (MHEC) aus Cellulose, Methylchlorid, Ethylenoxid und wäßriger NaOH-Lösung - gegebenenfalls in Anwesenheit eines inerten organischen Lösemittels wie Dimethoxyethan - fallen während der Reaktion und nach der Auswaschung der Roh-MHEC mit heißem Wasser im flüssigen Reaktions- und Waschmedium insbesondere folgende Produkte an: NaCl, Methanol, Dimethylether, niedere und höhere, teilweise methylierte Ethylenglykole, Methylchlorid, Ethylenoxid, gegebenenfalls ein organisches Lösemittel wie Dimethoxyethan und ein Celluloseetheranteil aus möglicherweise zu niedrig oder zu hoch substituierten Celluloseethermolekülen oder aus Celluloseethern mit zu niedriger Kettenlänge. Eine vergleichbare Zusammensetzung kann auch nach der Herstellung und/oder Reinigung anderer Celluloseethertypen anfallen, sie enthält dann beispielsweise andere Salze wie Natriumacetat, andere organische Lösemittel wie Dioxan, Toluol oder Diethylether, Propylenglykole usw. Das flüssige Reaktions- und Waschmedium wird dann nach Abtrennung der festen Rückstände (die im wesentlichen aus dem Wertstoff Celluloseether mit gegebenenfalls noch gewissen Salzanteilen bestehen) vorteilhafterweise zuerst einer Destillation unterzogen, bei der die leichtsiedenden organischen Reaktionsnebenprodukte wie Methanol, Dimethylether, die im Regelfall im molaren Überschuß eingesetzten nichtumgesetzten leichtsiedenden organischen Reaktionskomponenten wie Methylchlorid, Ethylenoxid und die gegebenenfalls eingesetzten organischen Lösemittel wie Dimethoxyethan weitgehend abdestillieren und beispielsweise durch eine fraktionierte Destillation in die Komponenten aufgetrennt werden können.

Die sich anschließende Ultrafiltration wird mit dem Rückstand der Destillation durchgeführt, der im wesentlichen (bezogen auf das vorstehende Beispiel) NaCl, einen Celluloseetheranteil und nieder- und höhermolekulare Ethylenglykole bzw. nieder- und höhermolekulare Ethylenglykolderivate sowie natürliche Verunreinigungen der Cellulose und deren Reaktionsprodukte enthält. Während der Ultrafiltration liegt die Temperatur des zu reinigenden Reaktions- bzw. Waschmediums bei oder oberhalb der Flockungstemperatur des Celluloseethers, aus dessen Herstellungs- bzw. Reinigungsprozeß das zu reinigende Reaktions- bzw. Waschmedium stammt, bevorzugt bei einer Temperatur oberhalb 60°C.

Es ist bekannt, daß sich durch Temperaturerhöhung bei der Ultrafiltration die Fluxraten steigern lassen. Damit ist jedoch eine Verschlechterung des Rückhaltevermögens der UF-Membran verbunden.

Auch beim erfindungsgemäßen Verfahren steigen die Fluxraten beim Betreiben der Ultrafiltration bei oder oberhalb der Flockungstemperatur des Celluloseethers deutlich an.
Das Rückhaltevermögen der Membran läßt jedoch überraschenderweise nicht nach. Bei diesen Temperaturen verändern demnach nicht nur der zu reinigende Celluloseether selbst, sondern auch wider Erwarten die während des Waschvorganges in Lösung gehenden, biologisch nur sehr langsam abbaubaren CSB-Träger ihren Lösezustand so, daß bei der UF deutlich höhere Fluxe ohne Einbußen bei der Trennschärfe resultieren.

Die Ultrafiltration kann diskontinuierlich oder auch kontinuierlich durchgeführt werden. Bei der diskontinuierlichen Fahrweise kann mit einem, oder mehreren Ultrafiltrations-Modulen gearbeitet werden, denen eine Vorlage vorgeschaltet wird. Das dem oder den Modulen zu entnehmende Permeat (das gereinigte Reaktions- und/oder Waschmedium), das im CSB verringert worden ist und einen niedrigeren Gehalt an schwer abbaubaren Inhaltsstoffen aufweist, wird zusammengefaßt und kann einer biologischen Abwasserreinigungsanlage zugeführt werden.
Das Konzentrat, das in der Endstufe des Verfahrens im vorliegenden Fall im wesentlichen einen Celluloseätheranteil sowie veretherte Nebenbestandteile der Cellulose enthält, wird nach Verlassen eines ersten Moduls dann - sofern vorhanden - noch einem zweiten Modul zugeführt, wonach sich gegebenenfalls noch weitere anschließen können; nach Verlassen des letzten Moduls wird es wieder der Vorlage zugeführt.
Bei der kontinuierlichen Fahrweise werden mehrere Stufen, die jeweils wiederum auch aus mehreren Modulen betehen können, zusammengefaßt, wobei das Konzentrat einer ersten Ultrafiltrationsstufe dann nicht wieder in eine Vorlage zurückgeführt, sondern in eine zweite Ultrafiltrationsstufe mit kleinerer Leistung überführt wird.
Das die zweite Stufe verlassende Konzentrat wird dann entsprechend einer noch kleineren dritten Stufe zugeführt, wonach auch noch weitere Stufen angeschlossen werden können, die die jeweilige Stufe verlassenden Permeate können unmittelbar einer biologischen Abwasserreinigungsanlage zugeführt werden.

Bei beiden Verfahrensvarianten werden Permeate erhalten, die biologisch besser abbaubar sind, weil die schwer abbaubaren Abwasserinhaltsstoffe weitestgehend durch die Ultrafiltrationsmembrane zurückgehalten werden und sich deshalb im Konzentrat befinden. Die erhaltenen Permeate sind klare Flüssigkeiten und können im CSB bis über 50 % reduziert sein.

Eine weitere Reduktion des CSB ist durch eine nachgeschaltete Nanofiltration möglich.

Die bei der Ultrafiltration ebenfalls anfallenden Konzentrate der Reaktions-und/oder Waschmedien enthalten biologisch schwer abbaubare organische Bestandteile, wie gelöste Celluloseetheranteile und veretherte Begleitstoffe der Cellulose und werden gemäß dem erfindungsgemäßen Verfahren zweckmäßigerweise einer Nachreinigung unterzogen. Diese kann darin bestehen, daß durch Zusatz von geeigneten Oxidationsmitteln wie Wasserstoffperoxid und/oder Ozon (beide auch in Kombination mit UV-Licht) zunächst ein oxidativer Abbau erfolgt und sich daran gegebenenfalls eine biologische Behandlung anschließt.
Die im Konzentrat enthaltenen biologisch nur langsam abbaubaren organischen Bestandteile können auch durch Zusatz von Flockungsmitteln oder durch Zusatz von heißwasserunlöslichen Celluloseethern aus dem Konzentrat weitgehend entfernt werden. Der Zusatz von Flockungsmitteln oder Celluloseethern erfolgt vorteilhafterweise bei einer Temperatur oberhalb der Flockungstemperatur der Celluloseether, bevorzugt bei einer Temperatur oberhalb 60°C. Geeignete Flockungsmittel sind vorzugsweise natürliche Gerbstoffe wie Tannin und Quebracho und/oder handelsübliche synthetische Produkte wie Phenol-Kondensationsprodukte bzw. Naphthol-Phenol-Kondensationsprodukte.

Geeignete Celluloseether sind alle bei der Waschtemperatur in heißem Wasser unlöslichen Produkte, besonders bevorzugt ist der Celluloseether, bei dessen Herstellung das zu behandelnde Abwasser resultiert.
Die Menge an zugesetzten Flockungsmitteln richtet sich nach der Menge der im Konzentrat enthaltenen organischen Bestandteile und liegt z.B. für Tannin vorteilhafterweise im Bereich von 1000-1400 mg/g organische Bestandteile Es hat sich auch gezeigt, daß eine bloße Temperaturerhöhung des UF-Konzentrats ohne Zusatz von Flockungsmitteln oder Celluloseethern zu einer Flockung von vorher gelösten organischen Bestandteilen führt.
Es hat sich gezeigt, daß durch Zugabe von Methylhydroxyethylcellulose in das nach der Ultrafiltration erhaltene Konzentrat der Anteil an zuvor nicht flockenden organischen Bestandteilen beträchtlich erhöht werden kann.
Vorteilhafterweise liegt die Temperatur oberhalb 60°C.
Die nach der Flockung im Konzentrat noch enthaltenen biologisch nur langsam abbaubaren CSB-Träger können falls erforderlich nach der oxidativen Behandlung biologisch weiter abgebaut werden.

Die Permeate können durch Nanofiltration bei einer Temperatur des Reaktions-bzw. Waschmediums oberhalb der Flockungstemperatur des Celluloseethers weiter gereinigt werden.
Unter Nanofiltration ist ein Membrantrennverfahren zu verstehen, das im Übergangsbereich von Ultrafiltration zur Umkehrosmose arbeitet. Es wird vorrangig zur Abtrennung von niedermolekularen organischen Substanzen aus salzhaltigen Lösungen eingesetzt.

Die zu reinigende Lösung wird ebenfalls in Konzentrat und Permeat aufgeteilt. Gearbeitet wird gewöhnlich mit Wickelmodulen bei Drücken zwischen 10 und 40 bar.

Das Konzentrat der Nanofiltration wird bevorzugt dem UF-Konzentrat und damit dem beschriebenen Flockungsschritt zugeführt. Das Permeat der Nanofiltration wird in eine biologische Kläranlage abgeleitet.

Es hat sich gezeigt, daß zur Nanofiltration die gleichen Werkstoffe und Anlagen geeignet sind, wie sie bei der Ultrafiltration verwendet werden, wobei jedoch in der Regel eine höhere Druckstufe einzuhalten ist und dichtere Membranen eingesetzt werden.

Die Vorteile des erfindungsgemäßen Verfahrens lassen sich wie folgt angeben:
- hohe Fluxraten bei der Ultrafiltration
- kleine Membranfläche
bei gleichzeitig
- weitgehender Verhinderung der Ausbildung einer Sekundärmembran
- hoher Konstanz der Fluxraten
und bei
- unverminderter Trennschärfe
- geringem Gehalt an organischen Bestandteilen im gereinigten Reaktions-bzw. Waschmedium
- verbesserter biologischer Abbaubarkeit des gereinigten Reaktions- bzw. Waschmediums

### Beispiele:

Das zur Ultrafiltration eingesetzte Waschwasser wird durch den nachfolgenden Herstellungsprozeß erhalten.

### Herstellung von Methylhydroxyethylcellulose:

162 g gemahlenen Zellstoffs werden in einem Lödigemischer mit einer Lösung von 111 g Ätznatron in 200 ml Wasser 45 Minuten lang alkalisiert. Nach Überführung in ein druckfestes Rührgefäß, evakuieren und überlagern mit Stickstoff wird ein Gemisch von 1260 g Methylchlorid und 24,2 g Ethylenoxid aufgedrückt. Es wird 60 Minuten bei 80 bis 90°C veräthert. Das erhaltene Produkt wird mit 10 l heißem Wasser weitgehend salzfrei extrahiert und weist nach dem Trocknen einen OCH₃-Gehalt von 24,1 % und einen OC₂H₄-Gehalt von 3,0 % auf. Das Waschwasser aus der MHEC-Herstellung wird zur Entfernung der flüchtigen organischen Bestandteile auf ein Volumen von ca. 3 l eingeengt und dient für die Ultrafiltrationsversuche.

### Herstellung von Methylhydroxypropylcellulose:

162 g gemahlenen Zellstoffs werden in einem Lödigemischer mit einer Lösung von 111 g Ätznatron in 200 ml Wasser 45 Minuten alkalisiert. Nach Überführen in ein druckfestes Rührgefäß, evakuieren und überlagern mit Stickstoff wird ein Gemisch von 1260 g Methylchlorid und 70 g Propylenoxid aufgedrückt. Es wird 60 Minuten bei 80 bis 90°C veräthert. Das erhaltene Produkt wird mit 10 l heißem Wasser gewaschen und weist nach dem Trocknen einen OCH₃-Gehalt von 24,3 % und einen OC₃H₆-Gehalt von 3,2 % auf.

Das Waschwasser aus der MHPC-Herstellung wird zur Entfernung der flüchtigen organischen Bestandteile auf ca. 6 l eingeengt und dient für die Ultrafiltrationsversuche.

### Beispiel 1

Ein Waschwasser aus der Methylhydroxyethylcelluloseherstellung wurde zur Reinigung mit Hilfe der Ultrafiltration durch eine Laborzelle mit Flachkanal gepumpt. Es wurde eine Polyethersulfon-Membran der Fa. Hoechst AG eingesetzt (Nadir® PES 20H). Bei einer Betriebstemperatur von 70°C und einem Betriebsdruck von 5 bar stellte sich zu Beginn des Versuchs ein Permeatflux von 66 l/m²h ein. Gegen Ende des Versuchs sank der Permeatflux auf 25 l/m²h ab. Unter diesen Bedingungen wurde ein Permeat erhalten, dessen CSB vergleichsweise zum CSB des Waschwassers um 44,8 % abgesenkt war.

### Beispiel 2

Ein Waschwasser aus der Methylhydroxyethycelluloseherstellung, welches mit 13700 mg CSB/l belastet war, wurde zur Reduzierung des CSB durch eine Ultrafiltrationszelle gepumpt. Die Ultrafiltration wurde bei einem Betriebsdruck von 5 bar und einer Betriebstemperatur von 70°C durchgeführt. Das unter diesen Bedingungen anfallende Permeat war nur noch mit 7790 mg CSB/l belastet. Der Permeatdurchsatz fiel während des Filtrationsvorganges von 46 l/m²h auf 23 l/m²h zurück.

### Beispiel 3

Ein Waschwasser aus der Methylhydroxyethylcelluloseherstellung wurde zur Reduzierung von CSB-Trägern durch einen Plattenmodul mit Rührer gepumpt. Bei einer Betriebstemperatur von 70°C und einem Betriebsdruck von 3 bar stellte sich ein über die Versuchszeit von 24 h konstanter Flux von 92 l/m²h ein. Unter diesen Bedingungen reduzierte sich die CSB-Belastung des Abwassers um 52,4 %.

### Beispiel 4 (Vergleichsbeispiel)

Ein Waschwasser aus der Methylhydroxyethylcelluloseherstellung wurde zur Reduzierung von CSB-Trägern durch einen Plattenmodul gepumpt. Bei einer Betriebstemperatur von 30°C und einem Betriebsdruck von 5,5 bar wurde ein Anfangsflux von 14 l/m²h und ein Endflux von 2,1 l/m²h erzielt. Der CSB des Abwassers von 14200 mg O₂/l reduzierte sich unter diesen Bedingungen auf 7700 mg O₂/l im Permeat.

### Beispiel 5

Das Waschwasser einer Methylhydroxypropylcellulose-Herstellung, das mit einem CSB von 16700 mg O₂/l belastet war, wurde zur CSB-Abreicherung einer Ultrafiltration in einer Laborzelle unterzogen. Bei einem Druck von 4 bar und einer Betriebstemperatur von 70°C wurde ein Anfangsflux von 69 l/m²h erreicht, der sich am Ende auf 33 l/m²h verringerte. Der CSB im Permeat betrug 9900 mg O₂/l. Somit war der CSB des MHPC-Waschwasser durch die UF um 40,7 % reduziert worden.

### Beispiel 6

Ein Waschwasser aus der Methylhydroxyethylcelluloseherstellung wurde einer Ultrafiltration in einem Plattenmodul bei 70°C unterzogen. Es wurde ein Konzentrat erhalten, welches im CSB um 2474 mg O₂/l angereichert war. Durch Zugabe von feuchter Methylhydroxyethylcellulose konnte bei einer Flockungstemperatur > 80°C der durch die Ultrafiltration angereicherte CSB-Anteil weitestgehend ausgeflockt werden. Die Ultrafiltration wurde mit der Polysulfon-Membran der Fa. Hoechst AG (Nadir® PS 100) durchgeführt.

### Beispiel 7

Nach der Ultrafiltration eines Waschwassers aus der Methylhydroxyethylcelluloseherstellung bei 70°C resultierte ein Konzentrat, welches im CSB auf 22050 mg O₂/l angestiegen war. Gegenüber dem CSB des Waschwassers betrug die CSB-Anreicherung im Konzentrat 29,7 %. Durch Flockung mit feuchter Methylhydroxyethylcellulose bei einer Temperatur über dem Koagulationspunkt der Methylhydroxyethylcellulose konnten ca. 75 % des durch die Ultrafiltration angereicherten CSB vom Konzentrat abgetrennt werden. Zur Ultrafiltration wurde die gleiche Membran wie in Beispiel 6 eingesetzt.

### Beispiel 8

Bei der Ultrafiltration eines Waschwassers aus der Methylhydroxyethylcelluloseherstellung bei 70°C fiel ein Konzentrat an, dessen CSB vergleichsweise zum CSB des Abwassers um 6700 mg O₂/l erhöht war. Mit Hilfe von feuchter Methylhydroxyethylcellulose konnten bei einer Temperatur über dem Koagulationspunkt der Methylhydroxyethylcellulose ein CSB-Anteil von 5200 mg O₂/l vom Konzentrat durch Flockung abgetrennt werden. Die Ultrafiltration wurde mit einer Polyethersulfon-Membran der Fa. Hoechst AG durchgeführt (Nadir® PES 30H).

### Beispiel 9

Ein Waschwasser aus der Methylhydroxyethylcelluloseherstellung wurde mit Hilfe der Ultrafiltration bei 70°C in ein im CSB abgereichertes Permeat und ein im CSB angereichertes Konzentrat aufgeteilt. Vergleichsweise zum Waschwasser war der CSB im Konzentrat um 5760 mg O₂/l erhöht. Durch Zugabe von 4,2 g reinem Tannin (DAB 7) zum Konzentrat konnten die durch die Ultrafiltration angereicherten CSB-Träger, die eine CSB-Anhebung zur Folge hatten, nahezu vollständig geflockt werden. Zur Ultrafiltration wurde eine Polysulfon-Membran der Fa. Hoechst AG eingesetzt (Nadir® PS 100).

### Beispiel 10

Von einem Waschwasser aus der Methylhydroxyethylcelluloseherstellung wurde durch Ultrafiltration bei 70°C ein Konzentrat erhalten, das im CSB um 4900 mg O₂/l angereichert war. Durch Erhitzen des Konzentrats auf ca. 100°C wurde dessen CSB infolge Flockung um 2000 mg O₂/l reduziert. Zur Ultrafiltration wurde die gleiche Membran wie in Beispiel 9 eingesetzt.

### Beispiel 11

Ein aus einem Waschwasser von der Methylhydroxyethylcelluloseherstellung durch Ultrafiltration bei 70°C gewonnenes Konzentrat wurde zur Beseitigung von Trübungen mit Wasser verdünnt, so daß eine wäßrige Lösung entstand, die einen CSB von 7400 mg O₂/l aufwies. Anschließend wurde diese Lösung mit 13,3 g H₂O₂ (30 %) versetzt und 15 Minuten lang mit einer Quecksilberhochdrucklampe, die eine Leistung von 700 W hatte, bestrahlt. Der CSB der UF-Konzentrat-Lösung reduzierte sich durch die H₂O₂/UV-Behandlung um 30 %. Die biologische Abbaubarkeit verbesserte sich um 925 Einheiten von 95 mg O₂/l BSB₅ auf 1020 mg O₂/l BSB₅.

### Beispiel 12 (Vergleichsbeispiel zu Beispiel 11)

Ein Waschwasser aus der Methylhydroxyethylcelluloseherstellung mit einem CSB von 11500 mg O₂/l wurde einer H₂O₂/UV-Behandlung unterzogen. Es wurden 13,3 g H₂O₂ (30 %) in 1 l Waschwasser eingetragen und anschließend wurde dieses H₂O₂-haltige Waschwasser mit einer Quecksilberhochdrucklampe von 100 W Leistung 15 Minuten lang bestrahlt. Nach der H₂O₂/UV-Behandlung lag im oxidativ behandelten Waschwasser ein Rest-OSB von 9900 mg O₂/l vor. Der CSB des Waschwassers war um 1600 mg O₂/l reduziert worden. Die biologische Abbaubarkeit durch Mikroorganismen stieg um 430 Einheiten von 1700 mg O₂/l BSB₅ auf 2200 mg O₂/l BSB₅.

### Beispiel 13

Durch Ultrafiltration bei 70°C wurde aus einem Waschwasser aus der Methylhydroxyethylcelluloseherstellung ein Permeat mit einem CSB von 8600 mg O₂/l erhalten. Dieses Permeat wurde zur weiteren CSB-Senkung einer Nanofiltration unterzogen. Bei einem Betriebsdruck von 30 bar stellte sich bei einer Betriebstemperatur von 72°C ein Flux von 125 l/m²h ein. Das unter diesen Bedingungen anfallende Filtrat der Nanofiltration war im CSB gegenüber dem UF-Permeat um 24 % abgereichert.

**Tabelle 1**

| Einfluß der Temperatur und des Rührvorganges in der Ultrafiltrationszelle auf die Ultrafiltration Eingesetz wurde eine Polyethersulfon-Membran der Fa. Hoechst AG (Nadir® PES 20 H). | | | | | | | | |
|---|---|---|---|---|---|---|---|---|
| Bsp. | Modul | Temp. (°C) | Druck (bar) | Flux Start (l/m².h) | Flux Ende (l/m².h) | CSB Waschwasser (mg O₂/l) | CSB Permeat (mg O₂/l) | CSB Reduktion (%) |
| 1 | Laborzelle (Flachkanal) | 70 | 5 | 66 | 25 | 15 400 | 8 500 | 44,8 |
| 2 | Laborzelle (Flachkanal) | 70 | 5 | 46 | 23 | 13 700 | 7 790 | 43,1 |
| 3 | Plattenmodul mit Rührer | 70 | 3 | 92 | 92 | 14 800 | 7 050 | 52,4 |
| 4^{l)} | Plattenmodul ohne Rührer | 30 | 5,5 | 14 | 2,1 | 14 200 | 7 700 | 45,8 |
| 5 | Laborzelle (Flachkanal) | 70 | 4 | 69 | 33 | 16 700 | 9 900 | 40,7 |

| | | | | | | | | |
|---|---|---|---|---|---|---|---|---|
| 1) = Vergleichsbeispiel | | | | | | | | |

**Tabelle 2**

| Abtrennung der im Konzentrat nach der Ultrafiltration (UF) angereicherten biologisch nur langsam abbaubaren CSB-Träger durch den Einsatz von Flockungsmitteln oder durch den Celluloseether selbst | | | | | | |
|---|---|---|---|---|---|---|
| | Konzentrat nach UF bei 70°C | | | Konzentrat nach Flockung | | |
| Beispiel-Nr. | CSB Waschwasser (mg O₂/l) | Vol. (%) | CSB (mg O₂/l) | CSB-Anreicherung (mg O₂/l) | CSB (mg O₂/l) | CSB-Abreicherung (mg O₂/l) |
| 6 | 17 100 | 70 | 19 574 | 2 474 | 17 174 | 2 400 |
| 7 | 17 100 | 60 | 22 050 | 4 950 | 18 305 | 3 745 |
| 8 | 17 100 | 50 | 23 800 | 6 700 | 18 600 | 5 200 |
| 9 | 17 100 | 55 | 22 860 | 5 760 | 17 240 | 5 620 |
| 10 | 17 100 | 60 | 22 000 | 4900 | 20 000 | 2 000 |

## Patentansprüche

1. Verfahren zur reinigenden Aufbereitung von bei der Herstellung von heißwasserunlöslichen Celluloseethern aus Cellulose, Alkalihydroxid und mindestens einem Veretherungsmittel in einem Wasser und gegebenenfalls mindestens ein organisches Lösungsmittel enthaltenden Medium anfallenden flüssigen Reaktions- und/oder Waschmedien durch Ultrafiltration in ein Permeat und ein Konzentrat, dadurch gekennzeichnet, daß die Ultrafiltration der Reaktions- und/oder Waschmedien bei einer Temperatur oberhalb von 45°C an oder oberhalb der Flockungstemperatur der Celluloseether durchgeführt wird,
wobei unter Flockungstemperatur die Temperatur verstanden wird, bei der die Transparenz einer 1 %igen wäßrigen Lösung eines Celluloseethers auf 50 % ihres bei Raumtemperatur gemessenen Wertes abgesunken ist, wobei eine Aufheizrate von 3 °C/min eingehalten wird.

2. Verfahren nach Anspruch 1, dadurch gekennzeichnet, daß die bei der Ultrafiltration anfallenden Konzentrate der Reaktions- und/oder Waschmedien mit Oxidationsmitteln oder durch Zusatz von Flockungsmitteln oder von heißwasserunlöslichen Celluloseethern behandelt werden.

3. Verfahren nach Anspruch 1 oder 2, dadurch gekennzeichnet, daß die bei der Ultrafiltration anfallenden Permeate durch Nanofiltration gereinigt werden.

4. Verfahren nach einem der Ansprüche 1 bis 3, dadurch gekennzeichnet, daß vor der Ultrafiltration organische Flüssigkeiten durch Destillation von flüssigen Reaktions- und/oder Waschmedien abgetrennt werden.

5. Verfahren nach einem der Ansprüche 1 bis 4, dadurch gekennzeichnet, daß als Flockungsmittel synthetische und/oder natürliche Gerbstoffe,
bevorzugt vegetabile Gerbstoffe und Tannin, und als heißwasserunlösliche Celluloseether Methylhydroxyethylcellulose bzw. Methylhydroxypropylcellulose verwendet werden.

6. Verfahren nach einem der Ansprüche 1 bis 5, dadurch gekennzeichnet, daß dem Konzentrat als Oxidationsmittel Wasserstoffperoxid und/oder Ozon zugesetzt werden, gegebenenfalls in Kombination mit UV-Licht.

7. Verfahren nach einem der Ansprüche 1 bis 6, dadurch gekennzeichnet, daß das zu behandelnde Abwasser aus der Produktion von Alkylcelluloseethern oder deren anionischen Derivaten stammt.

## Claims

1. A process for the purifying working-up of liquid reaction and/or wash media obtained during the preparation of cellulose ethers which are insoluble in hot water, from cellulose, alkali metal hydroxide and at least one etherifying agent in a medium containing water and optionally at least one organic solvent, by ultrafiltration into a permeate and a concentrate, characterized in that ultrafiltration of the reaction and/or wash media is carried out at a temperature above 45 °C, at or above the flocculation temperature of the cellulose ethers, flocculation temperature being defined as the temperature at which the transparency of a 1 % strength aqueous solution of a cellulose ether has fallen to 50 % of its value measured at room temperature, a heating-up rate of 3 °C/min being observed.

2. The process as claimed in claim 1, wherein the concentrates of the reaction media and/or wash media obtained during the ultrafiltration are treated with oxidizing agents of by addition of flocculating agents or cellulose ethers which are insoluble in hot water.

3. The process as claimed in claim 1 or 2, wherein the permeates obtained during the ultrafiltration are purified by nanofiltration.

4. The process as claimed in one of claims 1 to 3, wherein organic liquids are separated off from the liquid reaction media and/or wash media by distillation before the ultrafiltration.

5. The process as claimed in one of claims 1 to 4, wherein synthetic and/or naturally occuring tanning agents, preferably vegetal tanning agents or tannin, are used as flocculating agents and methylhydroxyethylcellulose or methylhydroxypropylcellulose are used as hot-water-insoluble cellulose ethers.

6. The process as claimed in one of claims 1 to 5, wherein hydrogen peroxide and/or ozone are added to the concentrate as the oxidizing agent, if appropriate in combination with UV light.

7. The process as claimed in one of claims 1 to 6, wherein the wastewater to be treated originates from the production of alkylcellulose ethers or of anionic derivatives thereof.

## Revendications

1. Procédé pour le traitement par purification des milieux de lavage et/ou réactionnel liquides provenant de la fabrication des éthers de cellulose insolubles dans l'eau chaude fabriqués à partir de cellulose, d'hydroxyde alcalin et d'au moins un agent d'éthérification dans un milieu contenant l'eau et au moins un solvant organique, par ultrafiltration pour obtenir un perméat et un concentré, caractérisé en ce que l'on met en oeuvre l'ultrafiltration des milieux de lavage et/ou réactionnels à une température supérieure à 45 °C ou supérieure à la température de floculation des éthers de cellulose, où on entend par température de floculation, la température à laquelle la transparence d'une solution aqueuse d'un éther de cellulose à 1 % est réduite de 50 % de sa valeur mesurée à la température ambiante, en maintenant un régime de chauffage de 3 °C/minute.

2. Procédé selon la revendication 1, caractérisé en ce que l'on traite les concentrés obtenus par ultrafiltration des milieux de lavage et/ou réactionnels avec des agents oxydants ou par addition d'agents floculants ou par addition d'éthers de cellulose insolubles dans l'eau chaude.

3. Procédé selon la revendication 1 ou 2, caractérisé en ce que l'on purifie par nanofiltration le perméat formé au cours de l'ultrafiltration.

4. Procédé selon une ou plusieurs des revendications 1 à 3, caractérisé en ce que l'on sépare avant l'ultrafiltration, les liquides organiques par distillation des milieux de lavage et/ou réactionnels liquides.

5. Procédé selon l'une des revendications 1 à 4, caractérisé en ce qu'on utilise comme agents de floculation des matières de tannage naturelles et/ou synthétiques, de préférence des matières de tannage végétales et le tannin, et comme éthers de cellulose insolubles dans l'eau chaude, la méthylhydroxyéthylcellulose, respectivement la méthylhydroxypropylcellulose.

6. Procédé selon une ou plusieurs des revendications 1 à 5, caractérisé en ce que l'on ajoute au concentré en tant qu'agent oxydant le peroxyde d'hydrogène et/ou l'ozone, éventuellement combinés à la lumière UV.

7. Procédé selon l'une des revendications 1 à 6, caractérisé en ce que les effluents liquides à traiter proviennent de la production des éthers d'alkylcellulose ou de leurs dérivés anioniques.
